# NEUE EUROPÄISCHE PATENTSCHRIFT

(11) **EP 2 396 565 B2**
(45) Veröffentlichungstag und Bekanntmachung des Hinweises auf die Entscheidung über den Einspruch: **10.07.2024**
(45) Hinweis auf die Patenterteilung: 11.04.2018
(21) Anmeldenummer: 10708703.3
(22) Anmeldetag: 10.02.2010
(51) Int. Cl.: F16D 66/00, F16D 65/092

(54) **FAHRZEUGBREMSE**
VEHICLE BRAKE
FREIN DE VÉHICULE

(30) Priorität: 11.02.2009 DE 102009008341
(43) Veröffentlichungstag der Anmeldung: 21.12.2011
(73) Patentinhaber: KNORR-BREMSE Systeme für Nutzfahrzeuge GmbH, 80809 München (DE)
(72) Erfinder: PAHLE, Wolfgang, 83707 Bad Wiessee (DE)
(74) Vertreter: Dantz, Jan Henning
(86) Internationale Anmeldenummer: PCT/EP2010/000811
(87) Internationale Veröffentlichungsnummer: WO 2010/091842

(56) Entgegenhaltungen:
- WO-A1-2006/112784
- DE-A1- 10 207 014
- JP-A- 2004 286 087
- JP-A- 2008 129 911
- US-A1- 2006 042 734
- US-A1- 2006 273 148

## Beschreibung

Die Erfindung betrifft eine Fahrzeugbremse, insbesondere eine Scheibenbremse oder Trommelbremse, gemäß dem Oberbegriff des Anspruchs 1 sowei ein Bremssystem.

Bremsbeläge von Fahrzeugen sind Verschleißteile und als solche nach einem bestimmten Verschleiß zu wechseln. Die Hersteller der Nutzfahrzeuge empfehlen den Fahrzeughaltern, dass sie bestimmte Anforderungen einhalten. Eine dieser Anforderungen besteht darin, dass die gesamten Bremsbeläge eines Fahrzeuges einen einheitlichen Reibwert aufweisen. Diese Anforderung wird häufig nicht eingehalten, da in den Werkstätten nicht die vom Hersteller des Nutzfahrzeuges gelieferten Bremsbeläge eingebaut werden, sondern auch von Herstellern, die die Bremsbeläge minderwertiger Qualität liefern.

Eine Fahrzeugbremse mit den Merkmalen des Oberbegriffs des Anspruchs 1 ist aus der WO 2006/112784 A1 bekannt.

Der Erfindung liegt die Aufgabe zugrunde, eine Fahrzeugbremse und ein Bremssystem der eingangs näher beschriebenen Art so auszulegen, dass zumindest erkennbar ist, ob es sich beim Wechseln der Bremsbeläge um den jeweiligen Sicherheitsanforderungen genügende Bremsbeläge handelt, selbst dann, wenn diese nach dem Wechseln der Bremsbeläge nicht vom Hersteller der Bremse freigegebene Bremsbeläge eingesetzt wurden, diese jedoch durch Homologation vom Kraftfahrtbundesamt freigegeben wurden.

Die gestellte Aufgabe wird durch eine Fahrzeugbremse mit den Merkmalen des Anspruchs 1 sowie durch ein Bremssystem mit den Merkmalen des Anspruchs 2 gelöst.

Zum Empfang der von der elektronischen Baueinheit gesendeten Signale ist das Lese- und Auswertgerät mit einer Antenne ausgestattet, die am Bremssattel installiert ist.

Der direkte Einsatz von belagspezifischen Daten wird damit sehr einfach, was die Sicherheit des Bremssystems deutlich erhöht, da z.B. einzelne Räder verschieden angesteuert werden können, wenn dies die Beläge erfordern, ohne dass es nötig wäre, belagspezifische Parameter erst zu ermitteln (z.B. durch Sensierung).

Beim Hersteller des Bremsbelages bzw. beim Hersteller des Nutzfahrzeuges können die bremsspezifischen Daten in die elektronische Baueinheit eingegeben werden. Beim Wechseln des Bremsbelages erkennt das Lese- und Auswertgerät, ob die zwingend aus Sicherheitsgründen vorgesehenen bremsspezifischen Daten erfüllt sind und welche weiteren Daten vorhanden sind (z.B. Herstelldatum, Reibwert, Belagfläche usw.) Die Kontrolle des Bremsbelages erfolgt nunmehr berührungslos und ohne Sichtkontakt. Die verwendete elektronische Baueinheit wird auch als Funketikett, Transponder, Smart Label oder Tag bezeichnet.

In bevorzugter Ausführung besteht die Baueinheit aus einem RFID-Chip, der einen Speicher und einen Prozessor sowie zur Signalübertragung eine Sendereinheit enthält. Die Abmessungen eines RFID-Chips sind relativ gering, so dass dieser beim Herstellen des Bremsbelages darin eingesetzt werden kann. Alternativ könnte er auch an geeigneter Stelle auf den Bremsbelag aufgeklebt werden.

Die räumliche Zuordnung des Lese- und Auswertgerätes zur elektronischen Baueinheit kann variiert werden. So ist in einer ersten Ausführung vorgesehen, dass die Stromversorgung der elektronischen Baueinheit aus einem elektromagnetischen Feld des Lese- und Auswertgerätes erfolgt. Bei dieser Anordnung muss jedoch das Lese- und Auswertgerät in unmittelbarer Nähe der Fahrzeugbremse oder direkt an der Fahrzeugbremse angeordnet sein. Sofern aufgrund des Abstandes zwischen der elektronischen Baueinheit und dem Lese- und Auswertgerät die Stromversorgung durch das elektromagnetische Feld nicht mehr möglich ist, kann auch die elektronische Baueinheit zu deren Stromversorgung mit einer Spannungsquelle ausgestattet sein. Als Spannungsquelle kommt bevorzugt eine Batterie in Betracht. Durch die Integration der elektronischen Baueinheit in das Steuergerät des ABS-Systems werden die Funktionsteile geschützt und sind bei Austausch ohne Demontage anderer Gruppen zugänglich.

Es ist in bevorzugter Ausführung vorgesehen, dass das Lese- und Auswertegerät im Inneren des Fahrzeugs installiert ist. Die Anordnung innerhalb des Fahrzeuges bietet den Vorteil, dass diese Stellung bequem zugänglich ist.

Insbesondere bei Neufahrzeugen könnte das Lese- und Auswertgerät sofort in das Steuergerät installiert werden.

Die für die erfindungsgemäße Fahrzeugbremse notwendigen Funketiketten, Transponder, Smart Label oder Tag werden in den sogenannten RFID-Systemen (Radio-Frequency-Identification) eingesetzt.

Durch ein solches System wird beispielsweise ein Barcode ersetzt.

Bei einem Bremssystem mit einer Fahrzeugbremse der zuvor beschriebenen Art ist vorgesehen, dass belagspezifische Daten auf der elektronischen Baueinheit des Bremsbelages von einer Steuereinheit des Fahrzeugbremssystemes weiterverarbeitbar sind, wobei die Daten belagspezifische Parameter, wie zumindest die bei der Herstellung erreichte Qualität, die Belagfläche oder den Reibwert umfassen, da diese Parameter die Bremswirkung beeinflussen.

In Weiterführung dieses Bremssystems können auch noch Daten zur Herstellung selbst, wie das Herstelldatum, die eingesetzte Charge, der Produktionsstandort und dergleichen aufgenommen werden. Dadurch lassen sich bei Qualitätsproblemen des Herstellers gezielt die betroffenen Bremsbeläge herausfinden. Dazu sind bislang entsprechende Daten auf den Rückenplatten der Bremsbeläge aufgedruckt. Nachteilig ist, dass bei einer Austauschaktion oder einer Rückrufaktion, dass alle Bremsbeläge ausgebaut und inspiziert werden müssten. Dadurch entstehen relativ hohe Kosten und in vielen Fällen ist die Kennzeichnung nicht mehr lesbar. Mittels des Label könnten entsprechende Daten bei der Installation der Beläge in das Lese- und Auswertgerät eingelesen und beispielsweise zentral im Fahrzeug gespeichert werden. Diese Speicherung könnte im elektronischen Bremssystem oder in einem Bordcomputer erfolgen. Vorteilhaft ist, dass das Auslesen eines Bordcomputers die Einzelinspektion überflüssig macht. Selbst wenn das Label im Betrieb der Bremse durch Überhitzung ausfällt, ist durch die erfolgte zentrale Datenerfassung kein Problem gegeben.

Anhand der beiliegenden Zeichnungen wird die Erfindung noch näher erläutert.

Es zeigen:
- Figur 1: eine Scheibenbremse teilweise geschnitten, jedoch ohne Bremszylinder und
- Figur 2: einen Bremsbelag für die Scheibenbremse im Aufriss.

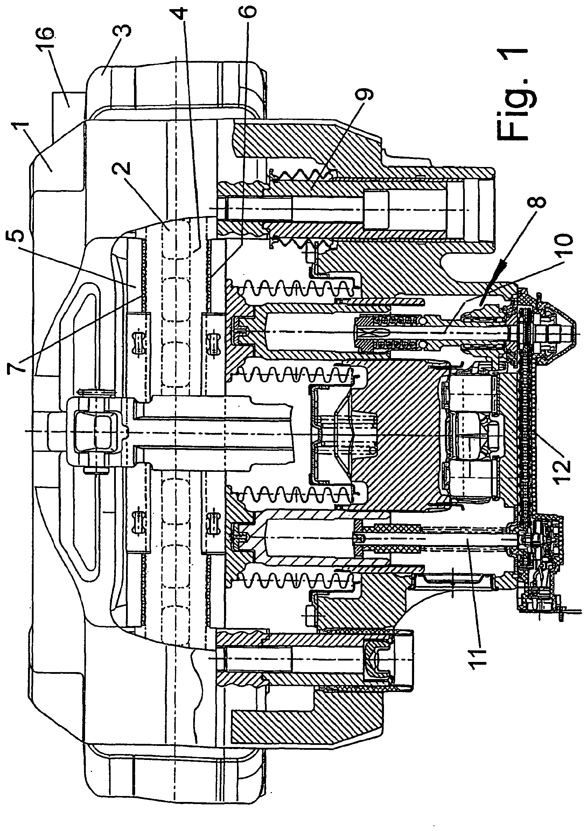

Die in der Figur 1 dargestellte Scheibenbremse ist mit einem Bremssattel 1 ausgestattet, der eine Bremsscheibe 2 umfasst. Diese Scheibenbremse ist außerdem noch mit einem Bremsträger 3 versehen. Beidseitig der Bremsscheibe 2 sind Bremsbelagträgerplatten 4, 5 angeordnet, an denen an der der Bremsscheibe 2 zugewandten Seite die Bremsbeläge 6, 7 festgelegt sind. Die Scheibenbremse ist ferner mit einer Zuspanneinrichtung 8 und einem Nachsteller 10 ausgestattet, der zum Ausgleich des Verschleißes der Bremsbeläge 6, 7 dient.

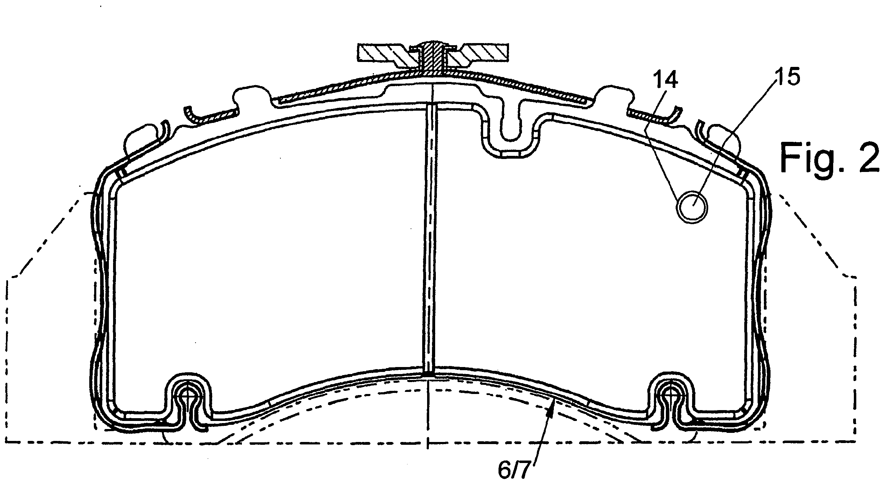

Die Scheibenbremse weist eine Lagerung 9 für den Bremssattel auf. Die Zuspanneinrichtung 8 ist ferner mit dem Nachsteller 10, einem Mitnehmer 11 und einer Kette 12 ausgestattet. Der in der Figur 2 dargestellte Bremsbelag 6, 7 wird in einen andeutungsweise dargestellten Bremsbelagschacht 13 eines Bremsträgers eingesetzt. Der Bremsbelag 6, 7 besteht aus einem Belagträger, der ein Belagmaterial trägt. Im dargestellten Ausführungsbeispiel ist jeder Bremsbelag 6, 7 mit einer Ausnehmung 14 versehen, in die ein RFID-Chip 15 eingesetzt ist. Dieser RFID-Chip 15 besteht im wesentlichen aus einem Speicher zur Speicherung bremsspezifischer Daten, einem Prozessor und einer Sendereinheit für die Übersendung von Signalen an ein Lese- und Empfangsgerät 16 per Funk. Die Ausnehmung 14 könnte im Belagmaterial vorgesehen sein, wobei er jedoch gegenüber der der Bremsscheibe 2 zugewandten Fläche in Richtung zum Belagträger verspringt, so dass der Chip auch bei verschleißendem Belagmaterial unbeschädigt bleibt. Die Ausnehmung könnte auch im Belagträger eingearbeitet sein.

Entgegen der Darstellung könnte der eine elektronische Baueinheit bildende Chip 15 auch nach der Herstellung des Bremsbelages 6, 7 an geeigneter Stelle aufgeklebt werden.

Im dargestellten nicht erfindungsgemäßen Beispiel der Figur 1 ist am Bremssattel 1 das Lese- und Auswertgerät 16 festgesetzt, welches die von dem Chip 15 übermittelten Signale empfängt. Das Lese- und Auswertgerät 16 ist ebenfalls mit einer Antenne versehen.

## Patentansprüche

1. Fahrzeugbremse, insbesondere Scheibenbremse oder Trommelbremse mit an Bremsbelagträgerplatten (4, 5) festgelegten Bremsbelägen (6, 7), und mit einer Zuspanneinrichtung (8), wobei zumindest ein Bremsbelag (6, 7) der Fahrzeugbremse mit einer elektronischen Baueinheit (15) ausgestattet ist, die zumindest zur Speicherung bremsbelagspezifischer Daten mit einem elektronischen Speicher versehen ist, wobei die elektronische Baueinheit aus einem einen Speicher und einen Prozessor enthaltenden Chip (15) sowie aus einer Antenne zur Signalübertragung besteht und wobei außerhalb des Bremsbelages (6, 7) ein mit einer Antenne zum Empfang der Signale der elektronischen Baueinheit (15) ausgestattetes Lese- und Auswertgerät (16) für die von der elektronischen Baueinheit (15) sendbaren Daten installiert ist, **dadurch gekennzeichnet, dass** die Antenne zum Empfang der Signale der elektronischen Baueinheit (15) am Bremssattel (1) installiert ist, wobei das Lese- und Auswertgerät (16) in das Steuergerät eines ABS-Systems integriert ist.

2. Bremssystem mit einer Fahrzeugbremse nach Anspruch 1, **gekennzeichnet durch** eine Auslegung derart, dass belagspezifische Daten auf der elektronischen Baueinheit des Bremsbelages von einer Steuereinheit des Fahrzeugbremssystems weiterverarbeitbar sind, wobei die Daten belagspezifische Parameter, zumindest die bei der Herstellung erreichte Qualität, Belagfläche oder den Reibwert umfassen, welche Einfluss auf die Bremswirkung haben.

3. Bremssystem nach Anspruch 2, **dadurch gekennzeichnet, dass** weitere Parameter mittels der elektronischen Baueinheit des Bremsbelages von einer Steuereinheit des Fahrzeugbremssystems weiterverarbeitet sind, wie z.B. Qualität des Bremsbelages, der Hersteller, das Herstelldatum sowie Daten zur Herstellung, die eingesetzte Charge, der Produktionsort und dergleichen.

## Claims

1. Vehicle brake, in particular a disk brake or drum brake having brake pads (6, 7) fastened to brake pad carrier plates (4, 5), and having an application device (8), wherein at least one brake pad (6, 7) of the vehicle brake is equipped with an electronic unit (15) which is provided with an electronic memory for storing at least brake pad-specific data, wherein the electronic unit consists of a chip (15) containing a memory and a processor, as well as an antenna for signal transmission, and wherein a reading and evaluation device (16) for the data transmissible by the electronic unit (15), said reading and evaluation device (16) being equipped with an antenna for receiving the signals of the electronic unit (15), is installed outside the brake pad (6, 7), **characterized in that** the antenna for receiving the signals of the electronic unit (15) is installed on the brake caliper (1), wherein the reading and evaluation device (16) is integrated in the control unit of an ABS system.

2. Brake system having a vehicle brake according to claim 1, **characterized by** a design such that pad-specific data on the electronic unit of the brake pad can be processed by a control unit of the vehicle brake system, the data including pad-specific parameters which influence the braking effect, at least the quality, pad area or coefficient of friction attained during manufacture.

3. Brake system according to claim 2, **characterized in that** further parameters by means of the electronic unit of the brake pad are processed by a control unit of the vehicle brake system, for example the quality of the brake pad, the manufacturer, the date of production and data relating to manufacture, the batch involved, the production location and the like.

## Revendications

1. Frein de véhicule, notamment frein à disque ou frein à tambour, ayant des garnitures de frein (6, 7) fixées à des plaques de porte-garniture de frein (4, 5) et un dispositif de serrage (8), dans lequel au moins une garniture de frein (6, 7) du frein de véhicule est équipée d'une unité électronique (15), pourvue d'une mémoire électronique au moins pour mémoriser des données spécifiques à une garniture de frein, l'unité électronique étant constituée d'une puce (15) contenant une mémoire et un processeur, ainsi que d'une antenne de transmission de signaux, et dans lequel il est installé, à l'extérieur de la garniture de frein (6, 7), un appareil de lecture et d'exploitation (16), équipé d'une antenne de réception des signaux de l'unité électronique (15), de données pouvant être envoyées par l'unité électronique (15), **caractérisé en ce que** l'antenne de réception des signaux de l'unité électronique (15) est montée sur l'étrier de frein (1), dans lequel l'appareil de lecture et d'exploitation (16) est intégré à l'appareil de commande d'un système ABS.

2. Système de freinage comprenant un frein de véhicule selon la revendication 1, **caractérisé par** une conception telle que des données spécifiques à une garniture, sur l'unité électronique de la garniture de frein, peuvent être traitées ultérieurement par une unité de commande du système de frein de véhicule, les données comprenant des paramètres spécifiques à une garniture, au moins la qualité obtenue à la fabrication, la surface de la garniture ou le coefficient de frottement, qui ont une influence sur l'effet de freinage.

3. Système de freinage selon la revendication 2, **caractérisé en ce que** d'autres paramètres sont traités ultérieurement, au moyen de l'unité électronique de la garniture de frein, par une unité de commande du système de freinage du véhicule, comme par exemple la qualité de la garniture de frein, le fabricant, la date de fabrication, ainsi que des données de fabrication, la charge mise en œuvre, le lieu de production et analogues.
